# EUROPEAN PATENT SPECIFICATION

(11) **EP 3 028 911 B1**
(45) Date of publication and mention of the grant of the patent: **01.08.2018**
(21) Application number: 15188052.3
(22) Date of filing: 02.10.2015
(51) Int. Cl.: B60T 11/18

(54) **LINKAGE ASSEMBLY FOR COUPLING A PLUNGER OF AN ACTUATOR TO A MANUALLY OPERATED INPUT MEMBER**
GESTÄNGEANORDNUNG ZUM ANKOPPELN EINES KOLBENS EINES AKTUATORS MIT EINEM HANDBETÄTIGTEN EINGANGSELEMENT
ENSEMBLE DE LIAISON POUR LE COUPLAGE D'UN PISTON D'UN ACTIONNEUR SUR UN ÉLÉMENT D'ENTRÉE À COMMANDE MANUELLE

(30) Priority: 25.11.2014 US 201414553017
(43) Date of publication of application: 08.06.2016
(73) Proprietor: Deere & Company, Moline, IL 61265 (US)
(72) Inventor: Kollath, Michael D, Reinbeck, IA Iowa 50669 (US); Bering, Christopher, Dike, IA Iowa 50624 (US); Hudson, Scott A, Cedar Falls, IA Iowa 50613 (US); Tebbe, Scott A, Cedar Falls, IA Iowa 50613-7968 (US)
(74) Representative: Dehnhardt, Florian Christopher

(56) References cited:
- DE-A1-102010 042 694
- DE-C1- 19 543 698
- GB-A- 2 309 275
- US-A- 4 603 600

## Description

The present invention relates to a linkage assembly for coupling a plunger of an actuator to a manually operated input member.

Many off highway vehicles utilize a hydraulically powered brake system to provide braking of one or more wheels and/or axles. These hydraulically powered brake systems typically consist of a hydraulic brake valve, brake pedals operated by the driver of the vehicle, and a linkage to transmit force from the brake pedals to the hydraulic brake valve. In certain of such hydraulically powered brake systems, the linkage includes a pin joint which transmits the force from the brake pedals to pushrods, and the pushrods then press against a plunger which is part of the hydraulic brake valve. Depressing the plunger actuates the brakes. A guide bushing keeps the pushrod in a mostly vertical orientation. The bushing, however, creates a pushrod motion such that as the top pin joint swings along an arc with the brake pedal. This causes the lower end of the pushrod to move horizontally as well as vertically, and the end of the pushrod slides or "scrubs" over the surface of the plunger, causing wear on both parts.

In addition, hydraulic systems can inherently have pressure ripple and vibration. This vibration can be transmitted from the hydraulic brake valve, through the plunger and the pushrod to the brake pedals. Such vibration can generate noise or other inconveniences to an operator of the vehicle. An example belonging to the state of the art is shown in document DE 10 2010 042694 A1.

In John Deere self-propelled sprayers, an additional extension spring is added to hold the pushrod off of plunger of the hydraulic brake valve when the brakes are not being applied. To do this, one end of the extension spring is fixed to a control support, and the other attached to the pushrod itself. An additional upstop is required to limit upward pedal travel due to this extension spring. Upon braking, the extension spring is stretched by the force applied to the brake pedals and pushrod, allowing the gap between the pushrod and the hydraulic brake valve to close, thus allowing the pushrod to depress the plunger. This design requires additional components (extension spring, mounting bracket, upstop for brake pedals) and the added resistance in the system which reduces the force delivered to the plunger of the hydraulic brake valve because the extension spring counteracts some of the force applied by the operator. Thus, a simple means to isolate the brake pedals and linkages from the hydraulic vibrations of the hydraulic brake valve is desired.

These and other objects are achieved by the present invention, wherein a coupling assembly for coupling a towed implement to a prime mover is provided according to claim 1. The coupling assembly comprises a pushrod and a resilient member coupled to the pushrod. The resilient member has an outer end which is engagable with the plunger when the pushrod is spaced apart from the plunger. The resilient member deforms to allow the pushrod to directly engage the plunger when the pushrod is moved towards the plunger.

For a complete understanding of the objects, techniques, and structure of the invention reference should be made to the following detailed description and accompanying drawings, wherein same reference numerals designate identical parts or parts with equivalent function:
- Fig. 1: is a partially sectional view of a first example of a linkage assembly not part of the invention,

- Fig. 2: is an enlarged view of a portion of the linkage assembly of Fig. 1,
- Fig. 3: is a view taken along lines 3-3 of the linkage assembly of Fig. 2,
- Fig. 4: is a partially sectional view of an embodiment of the linkage assembly according to the present invention,
- Fig. 5: is an end view of the linkage assembly of Fig. 4,
- Fig. 6: is a view taken along lines 6-6 of the linkage assembly of Fig. 4, and
- Fig. 7: is a view taken along lines 7-7 of the linkage assembly of Fig. 4.

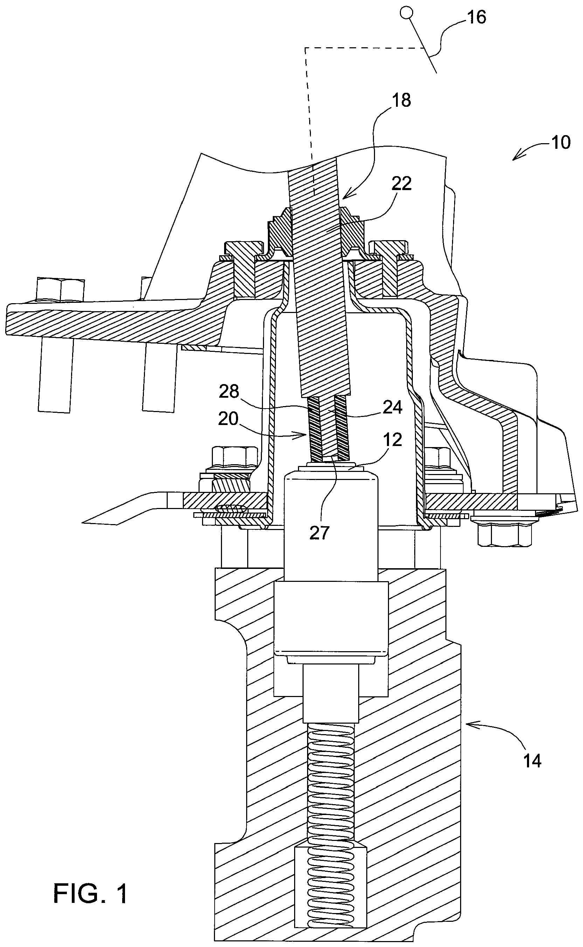

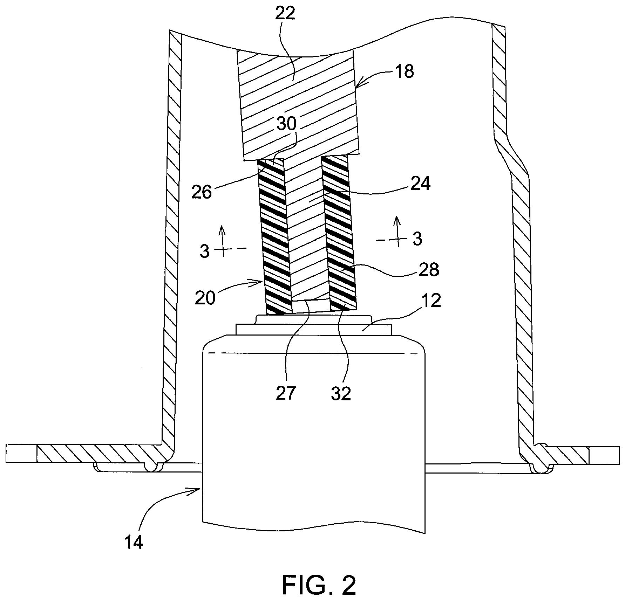

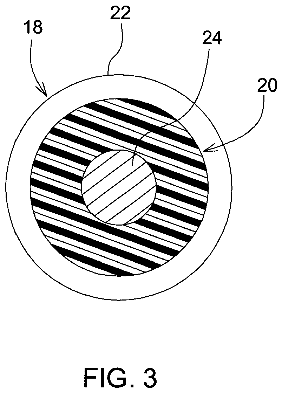

Referring to Figs. 1 to 3, a linkage assembly 10 couples a plunger 12 of an actuator, such as a brake valve 14, to an input member, such as a manually operated brake input member 16, such as a brake pedal. The linkage assembly 10 includes a pushrod 18 and a resilient member 20 or elastomeric element. The push rod 18 preferably has a circular cross sectional shape. The pushrod 18 has a larger diameter main body 22 and a smaller diameter end member or end portion 24. The end portion 24 is joined to the main body 22 by an annular shoulder 26. The pushrod 18 has an outer end 27 which is engagable with the plunger 12.

The resilient member 20 is a hollow sleeve 28 which receives and surrounds the end portion 24 of the pushrod 18. The sleeve 28 has an axial length which is longer than an axial length of the end portion 24. The sleeve 28 has an inner end 30 which engages the annular shoulder 26. The sleeve 28 has an outer end 32 which is engagable with a surface of the plunger 12. The outer end 32 is spaced apart axially outwardly from the outer end 27 of the pushrod 18. Thus, the resilient member 20 is coupled to the pushrod 18, and the resilient member 20 has an outer end 32 which is engagable with the plunger 12 when the pushrod 18 is spaced apart from the plunger 12. The resilient member 20 deforms to allow the pushrod 18 to directly engage the plunger 12 when the pushrod 18 is moved towards the plunger 12.

Thus, in this first embodiment, a tube-shaped rubber (or other elastomeric) element 28 is installed onto a reduced diameter on the end portion 24 of the pushrod 18. The elastomeric tube 28 extends beyond the outer end 24 of the pushrod 18 so that during normal operations without the brake pedal 16 applied, the elastomeric tube 28 holds the metal pushrod 18 off of the surface of the metal plunger 12 on the brake valve 14.

During braking, the elastomeric tube 28 compresses, allowing the metal pushrod 18 to travel down until it contacts the brake valve plunger 12 and then depresses the plunger 12. This provides a solid, durable metal to metal interface to transmit the high forces used for braking. The elastomeric tube 28 can be a relatively soft rubber or other material that provides good vibration damping without needing to have high wear resistance or high compressive strength, as it does not transmit much force. Also, because the elastomeric tube 28 is not pinched between the pushrod 18 and the plunger 12, the elastomeric tube 28 can flex to take up some of the 'scrubbing' motion, reducing the wear on its surfaces.

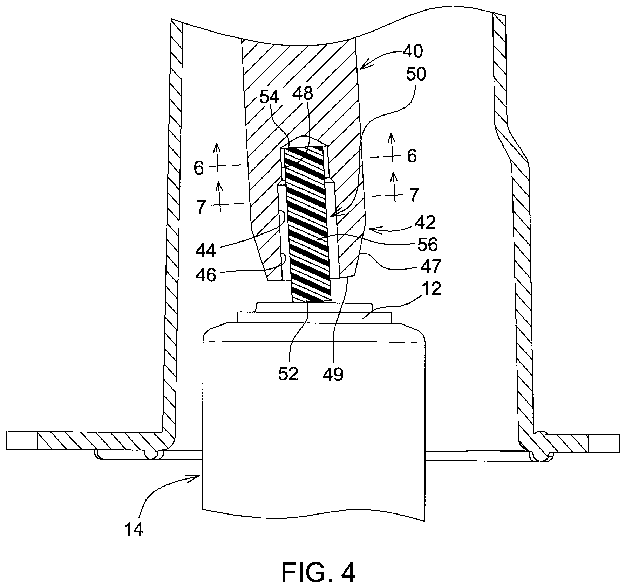

Referring now to Figs. 4 to 7, the pushrod 40 has a hollow end 42 in which is formed a blind bore 44 which opens towards the plunger 12. The blind bore 44 includes a larger diameter axially outer bore 46 and a smaller diameter axially inner bore 48. An end portion 47 of the pushrod 40 is tapered and terminates at an annular end or contact surface 49.

A solid resilient member 50 is received by the blind bore 44. The resilient member 50 has an axial length which is longer than an axial length of the blind bore 44. The resilient member 50 has an outer end 52 which is external to the blind bore 44 when the pushrod 40 is spaced apart from the plunger 12.

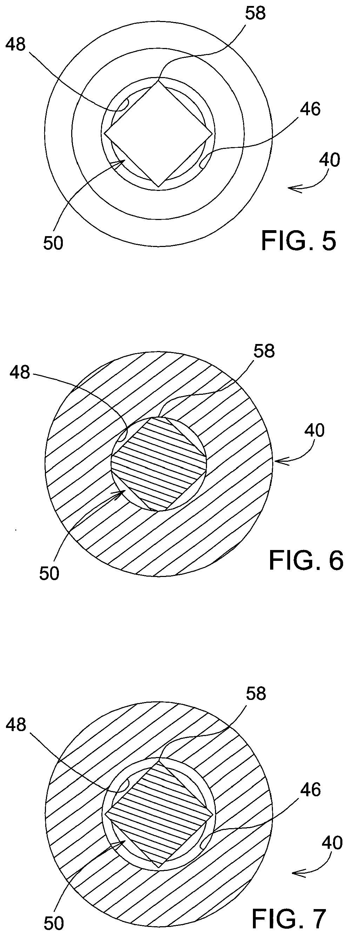

The resilient member 50 includes an axially inner part 54 and an axially outer part 56. The inner part 54 engages a wall of the inner bore 48. The outer part 56 is spaced apart from a wall of the outer bore 46. The inner part 54 is received and compressed by inner bore 48. Preferably, the resilient member 50 may have a polygonal cross-sectional shape which forms a plurality of corners 58. The resilient member 50 may have a quadrilateral polygonal cross-sectional shape. As best seen in Fig. 6, the corners 58 engage and are compressed by the wall of the inner bore 48.

Thus, in this second embodiment, a rubber (or other elastomeric) element 50 is inserted into a blind bore 44 drilled in the end portion 47 of the pushrod 18. The elastomeric element 50 extends beyond the outer end of the pushrod 18 so that during normal operations without the brake pedal applied, the elastomeric element 50 holds the metal pushrod 18 off of the surface of the metal plunger 12 on the brake valve 14, isolating the pushrod 18 and brake pedal 16 from vibration.

The elastomeric element 50 is a rubber part that may have a square cross section. The blind bore 44 in the outer end of the pushrod 18 is stepped, with an larger diameter outer bore 46 and an smaller diameter inner bore 48. The larger diameter outer bore 46 at the outer end of the pushrod 18 has a diameter larger than the corner-to-corner size of the elastomeric element 50. This provides room for the elastomeric element 50 to compress without becoming bound up due to friction on the sides of the larger diameter outer bore 46. The smaller diameter inner bore 48 is sized so that the corners 58 of the square section of the elastomeric element 50 will engage and be compressed by the sides of the smaller diameter inner bore 48. This provides a press fit which holds the elastomeric element 50 into the pushrod 18. The inner bore diameter, however, is larger than the flat-to-flat dimension of such rubber square element. This allows areas for air to be pushed past the elastomeric element 50 as it is being installed into the inner bore 48, preventing a situation where air is trapped and compressed behind the elastomeric element 50, preventing it from being installed fully.

During braking, the elastomeric element 50 compresses into the pushrod 18 within the larger diameter outer bore 46 so that the pushrod 18 can move towards and contact the brake valve plunger 12 directly. This provides a solid, durable, metal to metal interface to transmit the high forces used for braking. The elastomeric element 50 may be relatively soft material (rubber or other materials) which provides good vibration damping without needing to have high wear resistance or high compressive strength, as it does not transmit much force.

In both the example and the embodiment of the invention, the resilient member 20 or 50 does not substantially counteract the force applied by the operator when braking.

The result is linkage assembly 10 which includes an elastomeric element to dampen vibration between a brake valve 14 and a brake pedal 16 in the cab of an agricultural vehicle. The linkage assembly 10 forms together with 14 and 16 a brake control system of the agricultural vehicle.

## Claims

1. A linkage assembly for coupling a plunger (14) of an actuator to a manually operated input member, the linkage assembly (10) comprising a pushrod (40); and a resilient member (50) coupled to the pushrod (40), the resilient member (50) having an outer end (52) which is engagable with the plunger (14) when the pushrod (40) is spaced apart from the plunger (14), the resilient member (50) deforming to allow the pushrod (40) to directly engage the plunger (14) when the pushrod (40) is moved towards the plunger (14), **characterized in that** the resilient member is formed by a solid elastomeric element (50) which is received by a blind bore (44) which is included in the pushrod (40) and opens towards the plunger (14), wherein an outer end (52) of the solid elastomeric element (50) is external to the blind bore (44) when the pushrod (40) is spaced apart from the plunger (14).

2. The linkage assembly according to claim 1, **characterized in that** the blind bore (44) comprises a larger diameter outer bore (46) and a smaller diameter inner bore (48), and the solid elastomeric element (50) comprises an axially inner part (54) and an axially outer part (56), the inner part (54) engaging a wall of the inner bore (48).

3. The linkage assembly according to claim 2, **characterized in that** the outer part (56) is spaced apart from a wall of the outer bore (46).

4. The linkage assembly according to at least one of claims 1 to 3, **characterized in that** the solid elastomeric element (50) has an axial length which is longer than an axial length of the blind bore (44).

5. The linkage assembly according to at least one of claims 1 to 4, **characterized in that** the solid elastomeric element (50) has an inner end which is received and compressed by an inner end of the blind bore (44).

6. The linkage assembly according to at least one of claims 1 to 5, **characterized in that** the solid elastomeric element (50) has a polygonal or quadrilateral polygonal cross-sectional shape.

7. The linkage assembly according to at least one of claims 1 to 6, **characterized in that** the solid elastomeric element (50) has corners (58) which engage a wall of the blind bore (44).

8. The linkage assembly according to claim 7, **characterized in that** the blind bore (44) comprises a larger diameter outer bore (46) and a smaller diameter inner bore (48), and the smaller diameter inner bore (48) has a diameter which is smaller than a corner to corner dimension of the solid elastomeric element (50).

## Patentansprüche

1. Gestängeanordnung zum Ankoppeln eines Kolbens (14) eines Aktuators mit einem handbetätigten Eingangselement, wobei die Gestängeanordnung (10) eine Stößelstange (40) umfasst und ein elastisches Element (50) mit der Stößelstange (40) gekoppelt ist, wobei das elastische Element (50) ein äußeres Ende (52) umfasst, das mit dem Kolben (14) in Eingriff gebracht werden kann, wenn die Stößelstange (40) von dem Kolben (14) beabstandet ist, wobei sich das elastische Element (50) verformt, um zu ermöglichen, dass die Stößelstange (40) direkt mit dem Kolben (14) eingreift, wenn die Stößelstange (40) zu dem Kolben (14) bewegt wird, **dadurch gekennzeichnet, dass** das elastische Element durch ein Feststoffelastomerelement (50) gebildet ist, das durch eine Blindbohrung (44) aufgenommen ist, die in der Stößelstange (40) enthalten ist und sich zu dem Kolben (14) öffnet, wobei sich ein äußeres Ende (52) des Feststoffelastomerelements (50) außerhalb der Blindbohrung (44) befindet, wenn die Stößelstange (40) von dem Kolben (14) beabstandet ist.

2. Gestängeanordnung nach Anspruch 1, **dadurch gekennzeichnet, dass** die Blindbohrung (44) eine Außenbohrung (46) mit einem größeren Durchmesser und eine Innenbohrung (48) mit einem kleineren Durchmesser umfasst und das Feststoffelastomerelement (50) einen axial inneren Teil (54) und einen axial äußeren Teil (56) umfasst, wobei der innere Teil (54) mit einer Wand der Innenbohrung (48) eingreift.

3. Gestängeanordnung nach Anspruch 2, **dadurch gekennzeichnet, dass** der äußere Teil (56) von einer Wand der Außenbohrung (46) beabstandet ist.

4. Gestängeanordnung nach wenigstens einem der Ansprüche 1 bis 3, **dadurch gekennzeichnet, dass** das Feststoffelastomerelement (50) eine axiale Länge aufweist, die größer als eine axiale Länge der Blindbohrung (44) ist.

5. Gestängeanordnung nach wenigstens einem der Ansprüche 1 bis 4, **dadurch gekennzeichnet, dass** das Feststoffelastomerelement (50) ein inneres Ende aufweist, das durch ein inneres Ende der Blindbohrung (44) aufgenommen und durch dasselbe zusammengepresst wird.

6. Gestängeanordnung nach wenigstens einem der Ansprüche 1 bis 5, **dadurch gekennzeichnet, dass** das Feststoffelastomerelement (50) eine polygonale oder vierseitige polygonale Querschnittsform aufweist.

7. Gestängeanordnung nach wenigstens einem der Ansprüche 1 bis 6, **dadurch gekennzeichnet, dass** das Feststoffelastomerelement (50) Ecken (58) aufweist, die mit einer Wand der Blindbohrung (44) eingreifen.

8. Gestängeanordnung nach Anspruch 7, **dadurch gekennzeichnet, dass** die Blindbohrung (44) eine Außenbohrung (46) mit einem größeren Durchmesser und eine Innenbohrung (48) mit einem kleineren Durchmesser umfasst und die Innenbohrung (48) mit dem kleineren Durchmesser einen Durchmesser aufweist, der kleiner als eine von Ecke zu Ecke reichende Abmessung des Feststoffelastomerelements (50) ist.

## Revendications

1. Ensemble de liaison pour coupler un piston (14) d'un actionneur à un élément d'entrée à commande manuelle, l'ensemble de liaison (10) comprenant un poussoir (40); et un élément élastique (50) couplé au poussoir (40), l'élément élastique (50) présentant une extrémité extérieure (52) qui peut être engagée avec le piston (14) lorsque le poussoir (40) est espacé du piston (14), l'élément élastique (50) se déformant de manière à permettre au poussoir (40) d'engager directement le piston (14) lorsque le poussoir (40) est déplacé en direction du piston (14), **caractérisé en ce que** l'élément élastique est constitué d'un élément élastomère solide (50) qui est reçu par un alésage borgne (44) qui est incorporé dans le poussoir (40) et qui est ouvert en direction du piston (14), dans lequel une extrémité extérieure (52) de l'élément élastomère solide (50) est extérieure à l'alésage borgne (44) lorsque le poussoir (40) est espacé du piston (14).

2. Ensemble de liaison selon la revendication 1, **caractérisé en ce que** l'alésage borgne (44) comprend un alésage extérieur de plus grand diamètre (46) et un alésage intérieur de plus petit diamètre (48), et l'élément élastomère solide (50) comprend une partie axialement intérieure (54) et une partie axialement extérieure (56), la partie intérieure (54) engageant une paroi de l'alésage intérieur (48).

3. Ensemble de liaison selon la revendication 2, **caractérisé en ce que** la partie extérieure (56) est espacée d'une paroi de l'alésage extérieur (46).

4. Ensemble de liaison selon au moins une des revendications 1 à 3, **caractérisé en ce que** l'élément élastomère solide (50) présente une longueur axiale qui est plus grande qu'une longueur axiale de l'alésage borgne (44).

5. Ensemble de liaison selon au moins une des revendications 1 à 4, **caractérisé en ce que** l'élément élastomère solide (50) présente une extrémité intérieure qui est reçue et comprimée par une extrémité intérieure de l'alésage borgne (44).

6. Ensemble de liaison selon au moins une des revendications 1 à 5, **caractérisé en ce que** l'élément élastomère solide (50) présente une forme de section transversale polygonale ou polygonale quadrilatérale.

7. Ensemble de liaison selon au moins une des revendications 1 à 6, **caractérisé en ce que** l'élément élastomère solide (50) présente des coins (58) qui engagent une paroi de l'alésage borgne (44).

8. Ensemble de liaison selon la revendication 7, **caractérisé en ce que** l'alésage borgne (44) comprend un alésage extérieur de plus grand diamètre (46) et un alésage intérieur de plus petit diamètre (48), et l'alésage intérieur de plus petit diamètre (48) présente un diamètre qui est plus petit qu'une dimension de coin à coin de l'élément élastomère solide (50).
